(19) Europäisches Patentamt
European Patent Office
Office européen des brevets

(11) **EP 2 375 364 A1**

(12) **EUROPEAN PATENT APPLICATION**

(43) Date of publication:
**12.10.2011 Bulletin 2011/41**

(51) Int Cl.:
***G06Q 10/00*** *(2006.01)*

(21) Application number: **10003848.8**

(22) Date of filing: **12.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Karlsruher Institut für Technologie**
**76131 Karlsruhe (DE)**

(72) Inventors:
• **Sanders, Peter**
  **76137 Karlsruhe (DE)**
• **Geisberger, Robert**
  **76137 Karlsruhe (DE)**

(74) Representative: **Lemcke, Brommer & Partner**
**Patentanwälte**
**Bismarckstrasse 16**
**76133 Karlsruhe (DE)**

(54) **Method and system for time-dependent routing**

(57)    Computing distance tables is important for many logistics problems like the vehicle routing problem (VRP). While shortest distances from all source nodes in S to all target nodes in T are time-independent, travel times are not. We propose a method of determining a time-dependent route parameter for a transportation network, for use in an automated routing system in connection with traffic, transportation, and logistics, said method comprising the steps:

a) modelling the transportation network in the form of a graph (G) in the memory (2) of a computer system (1), said graph comprising a plurality of nodes (s, t, u, v, w), wherein said nodes correspond to starting-locations, target locations, and intermediate way-points in said transportation network, and a plurality of edges (E) interconnecting pairs of said nodes, wherein said edges indicate travel costs for travelling between respective nodes, wherein at least some of said travel costs are time-dependent quantities;

b) for at least one arbitrary starting-node (s) of said plurality of nodes and for a first set of departure times (τ), computing and storing first travel costs for respective first routes on said graph, said first routes leading from said one starting-node to a first plurality of intermediate way-point nodes (u, v, w) of said plurality of nodes;

c) for at least one arbitrary target node (t) of said plurality of nodes and for a second set of departure times, computing and storing second travel costs for respective second routes on said graph, said second routes leading from a second plurality of intermediate way-point nodes (u, v, w) of said plurality of nodes to said one target node;

d) for a plurality of target nodes and/or starting-nodes, determining a time-dependent travel cost for at least one route on said graph between said starting-node and said target node via at least one intermediate way-point node, which at least one intermediate way-point node is comprised in both of said first and second plurality of intermediate way-point nodes, from said first travel costs and said second travel costs, and

e) for a third set of departure times (τ), determining said time-dependent route parameter based on said time-dependent travel cost. We present the first efficient algorithms to compute time-dependent travel time tables in large time-dependent transportation networks.

Fig. 4

EP 2 375 364 A1

**Description**

The present invention generally relates to data processing. More specifically, the invention relates to a method of determining a time-dependent route parameter for a transportation network, for use in an automated routing system in connection with traffic, transportation, logistics or the like.

The invention also relates to a computer program product, said computer program product comprising program code for execution by means of a computer system, wherein said program code comprises a first plurality of instructions for implementing the method in accordance with the invention.

The invention further relates to a route planning system, comprising at least one computer system, wherein said computer system implements the method in accordance with the invention, preferably by means of the aforementioned computer program product.

Assume an infrastructure map (comprising, e.g., routes, roads, paths, etc.) as well as a pre-determined number of starting-positions and target positions, respectively, on said map. Repeated queries concerning travel costs, e.g., travel time, shall be answered for pairs of starting-positions and target positions, which positions do not necessarily coincide with actual geo-locations but may be defined arbitrarily. In the following description, for the sake of conciseness and without limitation, the travel time is used as a particular example of said travel costs, which may further comprise any one of vehicle wear, road toll, gas consumption, energy costs or the like, both individually and in combination.

The following paragraphs are meant to further illustrate the problem underlying the present invention while taking into account the above considerations:

Having a set of locations and requiring the travel times between all of them is a known problem, which is referred to as "time-dependent many-to-many shortest paths problem". It appears in many operations research problems, e.g., vehicle routing. Given a directed graph G = (V, E), wherein V denotes nodes and E denotes edges of said graph, and a set of source nodes or starting-nodes $S \in V$ and target nodes $T \in V$, a common approach to routing problems is to compute a travel time table of size $|S| \cdot |T|$. This table reduces the travel time computation to a simple table lookup.

Known methods of the above-defined type can be divided into three categories, or classes, A through C:

Methods of class A focus on the static (time-independent) many-to-many shortest paths problem. They determine the travel time for a (limited) number of starting-positions and target positions independently of the actual time interval during which travelling actually occurs. In this way, traffic congestions and other temporal occurrences cannot be taken into account, which is a serious disadvantage of said prior art methods. The standard approach for class A methods is a distance table,

which pre-computes travel times for every possible pair of starting-position and target position. This is possible since the pre-determined set of position pairs is very much limited in size in comparison with the total number of positions on the map. For to compute table $|S| \cdot |T|$ on a static road network, the most simple method is to perform a number of $|S|$ single source shortest path computations using Dijkstra's algorithm as described by Dijkstra, E.W, "A Note on Two Problems in Connexion with Graphs", Numerische Mathematik 1 (1959), pages 269-271 (ref. 1). However, this approach is more than three orders of magnitude slower than the algorithm described in Sebastian Knopp, Peter Sanders, Dominik Schultes, Frank Schulz, and Dorothea Wagner, "Computing Many-to-Many Shortest Paths Using Highway Hierarchies", in: Proceedings of the 9th Workshop on Algorithm Engineering and Experiments (ALENEX'07), pages 36-45, SIAM, 2007 (ref. 2). The Knopp algorithm can be adapted to any speedup technique for shortest paths that is bidirected, i.e., using a small forward search from the source node and a small backward search from the target node to find the shortest path, and non-goaldirected, i.e., the small forward search does not depend on the target node and vice versa. The best currently available method of computing said distance table is known from Robert Geisberger, Peter Sanders, Dominik Schultes, and Daniel Delling, "Contraction Hierarchies: Faster and Simpler Hierarchical Routing in Road Networks", in: Catherine C. McGeoch, editor, Proceedings of the 7th Workshop on Experimental Algorithms (WEA'08), volume 5038 of Lecture Notes in Computer Science, Springer (2008), pages 319-333 (ref. 0), and from above-mentioned ref. 2. However, class A methods yield results of comparatively low quality, which shows discrepancies between the internal model and reality, and they are not suitable for certain kinds of logistics optimization problems.

Using time-dependent travel times may greatly improve the quality of the computed routes and is particularly important for routing within cities with time windows. Each cell in the travel time table corresponds to a travel time function over the departure time. In contrast to the time-independent case, such a time-dependent table takes a lot longer to compute and occupies a lot more memory space.

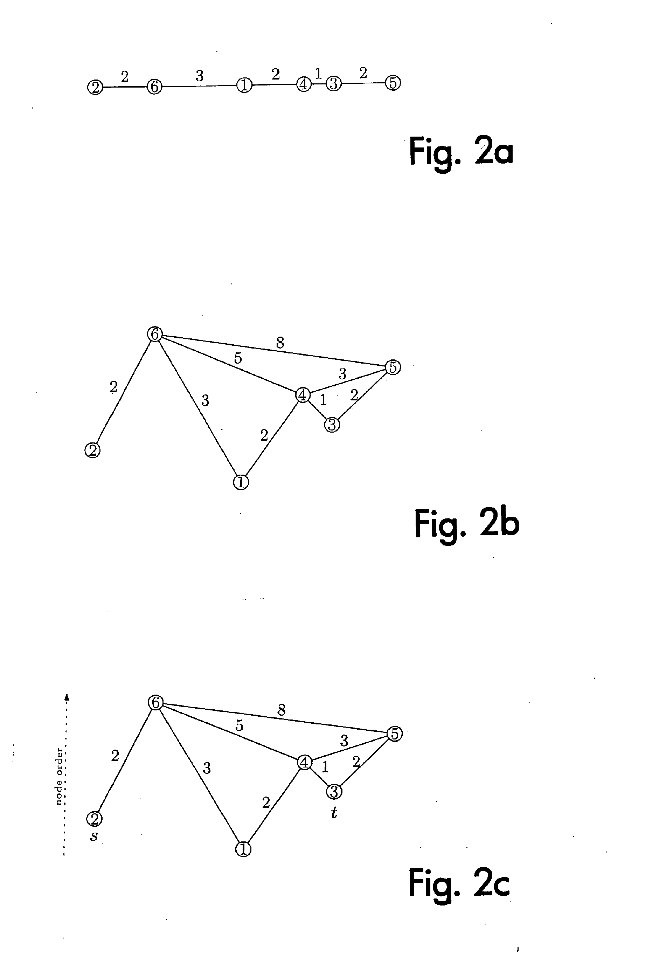

Methods of class B focus on the time-dependent point-to-point shortest path problem and may determine the travel time between arbitrary starting-positions and arbitrary target positions, respectively, for a fixed departure time at said starting-positions. Daniel Delling and Dorothea Wagner, "Time-Dependent Route Planning", in: Ravindra K. Ahuja, Rolf H. Möhring, and Christos Zaroliagis, editors, Robust and Online Large-Scale Optimization, volume 5868 of Lecture Notes in Computer Science, Springer (2009), pages 207-230 (ref. 3) give an overview of this type of method. Besides said graph, said methods usually generate additional data structures in the memory of a computer system. These data structures may be devised to speed-up computation of travel times. In particular, time-dependent contraction hierarchies (TCH), as described by Veit Batz, Daniel Delling, Peter Sanders, and Christian Vetter, "Time-Dependent Contraction Hierarchies", in: Proceedings of the 11th Workshop on Algorithm Engineering and Experiments (ALENEX'09), pages 97-105, SIAM, April 2009 (ref. 4), have to be highlighted in this context. TCH is a so-called hierarchical method which calculates a shortest path by combining searches from a starting-node, s, and from a target node, t, respectively. Starting at node s, TCH calculates travel time information to a first small set of nodes in the graph. This set of travel time information is called "forward search space" of node s. Additionally, TCH calculates travel time information from a second small set of nodes in the graph to target node t. This set of travel time information is called "backward search space" of node t. Said first and second sets overlap, and thus the travel time between node s and node t may be calculated for a fixed departure time. TCH will be explained in more detail below with reference to Figs. 2a through 2f. Said methods yield correct results since the graph is expanded with additional edges ("shortcuts"), which present paths in the original graph. However, class B methods are much too slow for dealing with a large number of routing queries, which are characteristic of logistics optimization, in an acceptable amount of time.

Methods of class C combine the approaches of class A and class B in a rather straightforward fashion. Known methods are the computation of a full time-dependent table, entry by entry, using approaches of class B which is slow and space-inefficient. On very small graphs it is also possible to use Dijkstra's algorithm to compute whole rows of the table at once. An alternative to a time-dependent table is the computation of several static tables for time slots (e.g. departure every hour), however, this is slow, space-inefficient and the quality of the resulting paths depends on the granularity of the time slots (the shorter the better) and the length of the paths. Said methods are used, e.g., in connection with the time-dependent vehicle routing problem (TDVRP), which is a known problem in operations research with a number of different solutions. In this context, one may refer to any one of the following publications: Malandraki, C., Daskin, M.S., "Time Dependent Vehicle Routing Problems: Formulations, Properties and Heuristic Algorithms", Transportation Science 26(3) (1992) 185-200; Jung, S., Haghani, A., "Genetic Algorithm for the Time-Dependent Vehicle Routing Problem", Journal of the Transportation Research Board 1771 (2001) 164-171; Ichoua, S., Gendreau, M., Potvin, J.Y., "Vehicle Dispatching with Time-Dependent Travel Times", European Journal of Operational Research 144 (2003) 379-396; Donati, A.V., Montemanni, R., Casagrande, N., Rizzoli, A.E., Gambardella, L.M., "Time dependent vehicle routing problem with a multi ant colony system", European Journal of Operational Research 185 (2008) 1174- 1191; Hashimoto, H., Yagiura, M., Ibaraki, T., "An Iterated Local Search Algorithm for the Time-Dependent Vehicle Routing Problem with Time Windows", Discrete Optimization 5 (2008) 434-456. The goal is to find routes for a fleet of vehicles such that all customers (locations) are satisfied and the total (time-dependent) cost is minimized. Solving this problem is important for logistics, supply chain management and similar industries.

All of the prior art approaches described above model said map in the form of a graph in the memory of a computer system. Positions on the map correspond to discrete nodes of said graph, and routes or trips are described as shortest (or otherwise "cost-economic") paths on said graph. For to determine the travel time, the shortest path between a starting-node and a target node is calculated. Methods of class C generate a time-dependent table, which saves a travel time function for each pair of starting-positions and target positions depending on the departure time. However, as already stated above, class C-type approaches require a large amount of memory space so that corresponding methods can be implemented on standard PC systems for small-sized tables only.

It is the object of the present invention to devise a method of the above-defined type capable of producing high quality results, which alleviate discrepancies between the internal model and reality, thus being suitable for logistics optimization. Furthermore, the inventive method shall work fast enough to deal with a large number of routing queries, which are characteristic of logistics optimization, in an acceptable amount of time. Finally, the inventive method shall require a relatively small amount of memory space so that it can be implemented on standard PC systems.

According to the invention, the object is achieved by means of a method presenting the features of appended patent claim 1. The object is further achieved by means of a computer program product presenting the features of appended patent claim 15. The object is also achieved by means of a route planning system presenting the features of appended patent claim 16.

Preferred further developments of the invention are presented in the form of subordinate claims, the wording of which is herewith incorporated by reference in the present description in order to avoid unnecessary repetition of text.

According to a first aspect of the invention, there is devised a method of determining a time-dependent route parameter for a transportation network, for use in an automated routing system in connection with traffic, transportation, and logistics, said method comprising the steps:

a) modelling the transportation network in the form of a graph in the memory of a computer system, said graph comprising a plurality of nodes, wherein said nodes correspond to starting-locations, target locations, and intermediate way-points in said transportation network, and a plurality of edges interconnecting pairs of said nodes, wherein said edges indicate travel costs for travelling between respective nodes, wherein at least some of said travel costs are time-dependent quantities;

b) for at least one arbitrary starting-node of said plurality of nodes and for a first set of departure times, computing and storing first travel costs for respective first routes on said graph, said first routes leading from said one starting-node to a first plurality of intermediate way-point nodes of said plurality of nodes;

c) for at least one arbitrary target node of said plurality of nodes and for a second set of departure times, computing and storing second travel costs for respective second routes on said graph, said second routes leading from a second plurality of intermediate way-point nodes of said plurality of nodes to said one target node;

d) determining a time-dependent travel cost for at least one route on said graph between said starting-node and said target node via at least one intermediate way-point node, which at least one intermediate way-point node is comprised in both of said first and second plurality of intermediate way-point nodes, from said first travel costs and said second travel costs, and

e) for a third set of departure times, determining said time-dependent route parameter based on said time-dependent travel cost.

According to a second aspect of the invention, there is devised a computer program product, comprising program code for execution by means of a computer system, wherein said program code comprises:

- a first plurality of instructions for implementing the method in accordance with the present invention, and
- optionally, a second plurality of instructions for implementing a user interface for performing a query for a time-dependent route parameter, for use in an automated routing system in connection with traffic, transportation, and logistics, wherein said interface preferably requires an input of at least one starting-location, at least one target location, and a departure time from said starting-location or an arrival time at said target location.

The problem of computing a table can be refined as a problem of implementing a suitable query interface: Given a starting-node $s \in S$ and a target node $t \in T$, one is interested in finding the earliest arrival time at t when departing from s at time T. To achieve this, in any algorithm that previously used a table, one needs to replace said table lookups with calls to the above-defined interface.

Therefore, according to a third aspect of the invention, there is devised a route planning system, comprising at least one computer system, wherein said computer system implements, preferably by means of the computer program product in accordance with the present invention:

- the method in accordance with the present invention, and
- optionally, a user interface for performing a query for a time-dependent route parameter, for use in an automated routing system in connection with traffic, transportation, and logistics, wherein said interface preferably requires an input of at least one starting-location, at least one target location, and a departure time from said starting-location or an arrival time at said target location,

wherein preferably said method and said interface are implemented on different computers in said computer system, said computer preferably being linked via a data network, preferably an intranet or the internet.

An algorithm behind the above-defined interface must provide a pre-computed data structure with the knowledge of G, S and T to answer these queries with high temporal efficiency. Especially in the common case where |S|, |T| << |V|, such an algorithm should be able to answer a query several orders of magnitude faster than known time-dependent query algorithms. Preferred further developments of the present invention therefore contribute five such algorithms that allow different tradeoffs between computation time, required memory space, and query time. Further presented are heuristic versions of these algorithms with approximation guarantees.

An important feature of the present invention relies on the combination of a forward travel cost and a backward travel cost, which - according to a preferred further development of the invention - may take the form of a forward travel cost profile or travel cost function (TCF) and a backward travel cost profile / travel cost function, respectively. If said travel cost is identified with the travel time, said profiles/functions may also be referred to as travel time profiles / travel time functions (TTF). For example, given a forward TCF/TTF, denoted f, between nodes $s \rightarrow v$, wherein v is an intermediate way-point node, and a backward TCF/TTF, g, between nodes $t \leftarrow v$, said travel time or travel cost functions can be combined to yield a combinded TCF/TTF between $s \rightarrow t$. However, the present invention is not limited to combining TCFs/TTFs, since the required total travel cost from s to t may be calculated directly from said forward and backward travel costs.

This aspect will now be explained in some more detail: In said graph G, each edge $(u,v) \in E$ may have a function, f, assigned to it as an edge weight. Function f specifies the time-dependent cost $f(\tau)$ needed to reach v from u via edge $(u,v)$ when starting from u at departure time T. Accordingly, the edge weights may be referred to as the above-mentioned travel cost functions (TCFs). In a transportation network one usually does not arrive earlier when one starts later. Therefore, in the case of TTFs, all TTFs, f, fulfil the so-called FIFO-property: for all times $\tau' > \tau : \tau' + f(\tau') > \tau + f(\tau)$. In this specification, all TCFs/TTFs are sequences of points representing piecewise linear functions. At least for TTFs the following three operations are needed in the context of the present invention:

- Evaluation: Given a TCF/TTF, f, and $\tau$ one wants to compute $f(\tau)$;
- Linking of TCFs/TTFs: Given two adjacent edges $(u,v),(v,w)$ with TCFs/TTFs f and g, one wants to compute the TCF/TTF of the whole path $(u \to_f v \to_g w)$. This is represented by a function $g * f : \tau \to g(f(\tau) + \tau) + f(\tau)$; wherein the last formula only holds for TTFs (cf. above);
- Minimum of TCFs/TTFs: Given two TCFs/TTFs f, f' from u to v, one wants to merge these into one while preserving all shortest paths. The resulting TCF/TTF from u to v is TCF/TTF $\min(f, f') : \tau \to \min\{f(\tau), f'(\tau)\}$.

In a time-dependent road network, shortest paths depend on the departure time. For given starting-node s and target node t there might be different shortest paths for different departure times. The minimal travel times from s to t for all departure times $\tau$ are called the travel cost profile from s to t and are represented by a TCF.

The inventive approach is non-trivial, as, to the knowledge of the applicant, none of the prior art computes and stores forward and backward TCFs/TTFs independently of each other since doing so is counter-intuitive and also not feasible by simply using Dijkstra's algorithm (cf. ref. 1). It is counter-intuitive to store backward TTFs without the knowledge of the source node, since TTFs are usually computed in a forward fashion from the source node, and, up to now, there was no advantage to do it backwards without the knowledge of the source node. Furthermore, the backward TTF between $t \leftarrow v$ does not map a time at t to a time at v as one would expect from the symmetric view of a forward TTF, but instead maps a time at v to a time at t.

Based on this approach, the inventive method can be employed to solve the above-described problems of the prior art, such as inefficient computation and huge memory requirements for storing travel time tables. According to a preferred embodiment of the invention, a possible application is the so-called "Intersect" algorithm, as described in detail farther down. "Intersect" uses forward and backward search, stores these search spaces, and intersects them to answer travel time queries between a predefined set of source nodes S and a predefined set of target nodes T (= row and column descriptions of the table). Although this has already published for the static scenario in ref. 0 and ref. 2, the transfer to the time-dependent scenario requires the non-trivial observation that one can combine forward and backward TCFs/TTFs. In this way, "Intersect" is just one possibility to reduce the invention to practice. The other embodiments described farther down can be viewed as improvements of the basic approach. For instance, approximation further reduces memory space requirements, and pre-computed tables reduce the number of function pairs that need to be compared.

Known applications, which require a travel time table as an input, e.g., for logistics optimization, need to receive a complete table with travel times between all of the start and target locations. A novel feature of the invention resides in the fact that there is no need to pre-compute the entire travel time table. Instead, there is provided, by means of suitable program code, an interface for calculating a travel time, which would be comprised in said table, in time- and memory-efficient fashion on an ad hoc basis. This approach is highly advantageous since some of the data comprised in prior art tables is never used, and not all of the data are required at the same time.

In so-called "pseudo code", according to an embodiment of the invention an actual interface of the above type may be implemented as:

double GiveTraveltime (int s, int t, double $\tau$)

Nodes are labelled as 0 through n-1 (n = total number of nodes), and the travel time is provided with a unit of seconds. Starting-node is s, and target node is t, departure time is denoted $\tau$. The actual computing method accesses two data structures:

Searchspace[0..n-1] forward, Searchspace[0..n-1] backward

A search space is a set of pairs

Searchspace: set of {int, TTF}

Each pair constitutes a node including a TTF. A pair {v,f} in the forward search space of node s denotes that the travel time from $s \to v$ for departure time $\tau$ is given by TTF = $f(\tau)$. A pair {v,g} in the backward search space of node t denotes that the travel time from v → t for departure time $\tau$ is given by TTF = g($\tau$). For to determine the travel time for a query (s, t, $\tau$), all of pairs (v,f) $\in$ forward[s] and (v,g) $\in$ backward[t] are determined, and the resulting travel time is the mimimum of all functions f($\tau$) + g(f($\tau$) + $\tau$). Computing forward and backward is achieved by means of TCH (cf. ref. 4).

A preferred embodiment of the inventive method can be described by using different levels of abstraction:

1) By means of said computer system, the transportation network (i.e., said map) is modelled as a graph in the memory of said computer system. In this graph, trips correspond to shortest paths. The invention may rely on the fact that the set of starting-locations and target locations, respectively, is known and generates further data structures there from in order to provide answers to queries of the form "starting-location, target location, time window / departure time" in a time-/memory-efficient manner.

2) According to a further development the method comprises using time-dependent contraction hierarchies (TCH) as described in ref. 4, since this is currently the only known approach that provides small enough forward and backward search spaces. For a set S of starting-locations and a set T of target locations, a forward search space is computed and stored for each s $\in$ S and for all times. Likewise, for each t $\in$ T a backward search space is computed and stored. A travel time query between s and t may then be answered by combining the forward search space of s and the backward search space of t, without having to re-compute the search spaces.

3) The forward and backward search spaces are small sub-graphs, in which each edge has a TTF and which do not form closed loops. By combining a forward search space and a backward search space, a small graph is generated between s and t which comprises the shortest path. Due to the hierarchical ordering of nodes in the graph the forward and backward search spaces may be intersected with high temporal efficiency. By optionally providing upper and/or lower bounds for the travel time, said last step may be completed prematurely. As an alternative, each node may possess a TTF which provides the travel time from the starting-location (or to the target location) depending on the departure time (or the arrival time).

As already mentioned farther up, according to a further development of the method in accordance with the invention the nodes of said graph may be arranged by using a hierarchical speedup technique, suitable hierarchical speedup techniques comprising Contraction Hierarchies, Highway Hierarchies, Reach-based Routing, Highway Node Routing, and Transit-node Routing, preferably as described in D. Delling, P. Sanders, D. Schultes, and Dorothea Wagner, "Engineering Route Planning Algorithms", Algorithmics of Large and Complex Networks, Lecture Notes in Computer Science, vol. 5515, Springer 2009, pages 117-139, http://i11www.ira.uka.de/extra/publications/dssw-erpa-09.pdf, the contents of which is herewith incorporated by reference into the present document as if fully set forth.

According to a further development of the method in accordance with the invention the nodes of said graph may, in particular, be arranged in the form of a time-dependent contraction hierarchy, TCH, wherein the nodes are ordered by increasing importance, and wherein individual nodes are contracted by removing them from the graph without changing minimum travel costs, e.g., shortest travel times, between remaining, more important nodes, preferably as defined in G.V. Batz, D. Delling, P. Sanders, C. Vetter, "Time-dependent Contraction Hierarchies", ALENEX 2009, pages 97-104, the contents of which is herewith incorporated by reference into the present document as if fully set forth.

A hierarchical speed-up technique, as may be used in some embodiments of the present invention, does not necessarily arrange nodes (although most do). The important task for these techniques in the present scenario is to define the intermediate forward/backward way-point nodes and to describe how to compute the costs to/from said these nodes, so that one can compute the cost from source to target by combining the forward/backward costs at said way-point nodes.

As stated farther up, in a time-dependent contraction hierarchy all nodes of G may be ordered by increasing importance. In order to simplify matters, one can identify each node with its level of importance, V, i.e., V = 1..n. Now, the TCH is constructed by contracting the nodes in the above order. Contracting a node v means removing node v from the graph without changing shortest path distances between the remaining (more important) nodes. In this way, one may construct the next higher level of the hierarchy from the current one. A trivial way to contract a node v is to introduce a shortcut edge (u,w) with TCF g * f for every path u →f v →g w with v < u,w. But in order to keep the graph sparse, one can try to avoid a shortcut (u,w) by finding a witness, i.e., a travel time profile W from u to v fulfilling, for all times $\tau$ : W ($\tau$) < (g * f)($\tau$). Such a witness proves that the shortcut is never needed. The node ordering and the construction of the TCH may be performed offline in a pre-computation and are only required once per graph independent of S and T.

In the point-to-point scenario, one may compute the travel time profile between source and target by performing a two-phase bidirectional time-dependent profile search in the TCH. The first phase is a min-max search computing a corridor and the second phase is a profile search within the corridor. The special restriction on a TCH search is that it only goes upward, i.e., edges are relaxed only where the other node is more important. Forward and backward searches meet at so-called candidate nodes. Each of the candidate nodes u represents a TTF $g_u * f_u$ from source to target (though not necessarily an optimal one). The travel time profile may then be obtained by min $\{g_u * f_u \mid u$ candidate$\}$.

During the min-max search, a stall-on-demand (cf. ref. 0, the contents of which is herewith incorporated by reference into the present document as if fully set forth) may be performed: This means that a node u is stalled when a maximum to u coming from a higher level is better than the minimum. The edges of stalled nodes are not relaxed.

According to a further development of the method in accordance with the invention said node ordering and/or construction of the TCH may be performed once for a plurality of determinations of time-dependent route parameters, wherein preferably said node ordering and/or said TCH construction are electronically stored in computer memory for use in subsequent determinations of time-dependent route parameters by means of a computer system.

According to a further development of the method in accordance with the invention step b) may comprise obtaining said first travel costs in the form of a forward travel cost profile, as already mentioned above, for a respective route between said starting-node and each intermediate way-point node of said first plurality of intermediate way-point nodes, wherein a travel cost profile between two nodes is defined as comprising the time-dependent travel costs between said two nodes at least for said first set of departure times and is defined by means of a travel cost function, TCF or f$(\tau)$, where $\tau$ denotes the departure time; step c) may comprise obtaining said second travel costs in the form of a backward travel cost profile for a respective route between said target node and each intermediate way-point node of said second plurality of intermediate way-point nodes; and step d) may comprise determining said time-dependent travel cost by combining said forward travel cost profile and said backward travel cost profile at said intermediate way-point node.

According to a further development of the method in accordance with the invention said method may be characterized by the further steps of: combining said forward travel cost profile and said backward travel cost profile to obtain a combined travel cost profile; and determining said time-dependent travel cost from said combined travel cost profile.

According to a further development of the method in accordance with the invention said time-dependent travel costs, in step a), may comprise, without any limitation, at least one of travel time, travel expenses, route toll, wear, labour costs, energy costs, and other travel-related costs.

According to a further development of the method in accordance with the invention a derivative quantity of the departure time may be used as input variable, at least in step b) and/or step c), wherein preferably said derivative quantity is the arrival time at said target node. In this way, the proposed method can be employed for determining the departure time which is required in order to arrive at the target node at a pre-determined time.

According to a further development of the method in accordance with the invention any one of said first through third sets may comprise a subset of all departure times, wherein said all departure times denote all departure times within a predefined range, which is preferably infinite, e.g., under the assumption that all travel cost functions are periodical with period T, so that $f(\tau + T) = f(\tau) = f(\tau + 2T)$.

According to a further development of the method in accordance with the invention at least some of said time-dependent travel costs may be approximate travel costs, with several degrees of approximation, in order to further speed up the computation.

According to a further development of the method in accordance with the invention determining said route parameter need not be limited to determining said route characteristics but may comprise determining an actual time-dependent route in said route network, e.g., for navigation purposes.

According to a further development of the method in accordance with the invention steps a) through c) may be performed only once for a plurality of determinations of time-dependent route parameters, wherein preferably said first and seconds travel costs or said forward and backward travel cost are electronically stored in system memory for use in subsequent determinations of time-dependent route parameters.

According to a further development of the method in accordance with the invention at least steps a) through c) may repeated based on a change of travel costs between respective nodes of said graph, wherein preferably said travel costs are determined experimentally and/or on a regular basis, e.g., by a suitable route network monitoring system.

Further embodiments of the inventive method may employ specific algorithmic ingredients, which shall be defined by the following:

Profile Search: To compute the travel cost profile from a source node s to all other nodes, one may use a label correcting modification of Dijkstra's algorithm. The modifications are as follows:

- Node labels. Each node v has a tentative TCF from s to v.
- Priority queue (PQ). The keys used are the global minima of the labels. Reinserts into the PQ are possible and happen (label correcting).
- Edge Relaxation. Consider the relaxation of an edge (u, v) with TCF $f_{uv}$. Let the label of node u be the TTF $f_u$. The label $f_v$ of the node v is updated by computing the minimum TCF $f_v$ and $f_{uv} * f_u$.

Min-Max Search: Profile search is a very expensive algorithm. Min-max search is a roughly approximating modification of profile search and runs much faster. Essentially, it may be implemented in the form of two searches based on Dijkstra's algorithm, one based on the global minima and one on the maxima of the edge TTFs. The results are a lower and an upper bound on the travel time profile.

Corridors: A subgraph C of G containing s and t, such that t is reachable from s, is called a corridor. For example, corridors help to speed up profile searches very much. This is achieved by first computing a corridor containing mainly the relevant parts of the transportation network. Afterwards, profile search is performed in said corridor only. Having performed, e.g., a min-max search, the subgraph given by the set of edges processed by said search is a corridor.

According to a further development of the method in accordance with the invention, a first search operation may be performed, preferably in connection with step d, for determining a corridor, wherein said corridor is defined as a sub-graph of all reachable nodes and edges from the source (or target) node in the TCH by using only edges leading to more important nodes. Said corridor contains source (or target) and the intermediate way-point nodes. It may not comprise nodes or edges that do not contribute to a shortest path (with respect to travel times, this means the fastest path): Furthermore, it may be possibly to execute more than one search to further reduce the number of nodes and edges in the corridor (for example, first use min/max, and then execute an approximate query within the corridor to further reduce the number of nodes and edges). Subsequently, a second search operation may be performed, which is limited to said corridor, in order to compute the data according to step b) or to compute the data according to step c).

According to a further development of the method in accordance with the invention said first search operation may be a minimum-maximum search operation, preferably in the form of two searches based on Dijkstra's algorithm as defined in ref. 4, the contents of which is herewith incorporated by reference into the present document as if fully set forth. This includes a first one based on the global minima and a second one based on the global maxima of said time-dependent travel costs indicated by said edges, yielding a lower and an upper bound, respectively, on a corresponding travel cost profile. The forward search from a source node s computes, for each reachable node u, a lower bound and an upper bound on the travel time profile from s→u. The backward search from a target node t computes, for each reachable node u, a lower bound and an upper bound on the travel time profile from u→t. Said second search operation may then be an exact profile search operation on the travel time profiles from s→u and from u→t, respectively.

According to a further development of the method in accordance with the invention said method may further comprise the steps: computing, preferably in step b, for said at least one arbitrary starting-node, s, a set $F_s:=\{u, f_u\}$, wherein $f_u$ denotes the travel cost profile from said at least one arbitrary starting-node to an intermediate way-point node, u, of said first plurality of intermediate way-point nodes, and computing, preferably in step c, for said at least one arbitrary target node, t, a set $B_t:=\{u, g_u\}$, wherein $g_u$ denotes the travel cost profile from said at least one arbitrary target node, t, to said intermediate way-point node, u, of said second plurality of intermediate way-point nodes.

As already mentioned farther up, according to a further development of the method in accordance with the invention an intersect algorithm ("Intersect") may be performed in order to determine the earliest arrival time or cheapest travel cost, $\delta$, from said starting-node, s, at said target node, t, for departure times, $\tau$, said intersect algorithm comprising, in arbitrary pseudo-code:

```
1 δ:= ∞;                              // tentative earliest arrival time
2 foreach (u, fᵤ) ∈ Fₛ, (u, gᵤ) ∈ Bₜ do          // candidate node u
3   | if min gᵤ + min fᵤ + τ < δ then                    // prune
4   |   ⌊ δ = min {δ, gᵤ(fᵤ(τ) + τ) + fᵤ(τ) + τ};   // evaluate TTFs
5 return δ;
```

wherein preferably a computing duration is further reduced by limiting the set of visited candidate nodes. The intersect algorithm can also be used to compute a travel cost profile or a sub-profile, as described, e.g., in step d).

According to a further development of the method in accordance with the invention said method may further comprise the steps of: computing a table

$$c_{\min}(s,t) := \arg\min\{\min g_u + \min f_u \mid u, (u, f_u) \in F_s, (u, g_u) \in B_t\},$$

and, when computing an earliest arrival time, evaluating the time via a candidate node $c_{\min}(s,t)$. This may further comprise scanning over all candidate nodes for a query from s→t. For each pair (s,t) the "minimal" candidate is determined. By evaluating this candidate c_min(s,t) first, the pruning of the intersect algorithm (line 3) works better, and evaluating some of the other candidates (line 4 of the above "Intersect" algorithm) may be omitted. This also holds for computing a travel cost profile or a sub-profile as described in step d). The above-described algorithm may be referred to as "MinCandidate" algorithm.

According to a further development of the method in accordance with the invention said method may further comprise the steps of: computing a table

$$c_{rel}(s,t) := \left\{ u \mid \min g_u + \min f_u < \min\{\max g_v + \max f_v \mid v \text{ candidate}\} \right\},$$

and looking at relevant candidate nodes in $c_{rel}(s,t)$ in order to determine an earliest arrival time at said target point from said starting-point. The definition of a "relevant" candidate is given by the above formula. "Relevant" is no fixed term, it denotes a subset of all candidate nodes such that the intersect algorithm only needs to scan over said subset and still computes the correct result. This speeds up the intersect algorithm. This also holds for computing a travel cost profile or a sub-profile as described in step d). Compared to c_min(s,t), which has only one candidate node for each pair (s,t), c_rel(s,t) is a whole set of candidate nodes. The above-described algorithm may be referred to as "RelevantCandidate" algorithm.

According to a further development of the method in accordance with the invention said method may further comprise the steps of: computing, for every departure time, $\tau$, a table

$$c(s,t,\tau) := \arg\min \left\{ g_u\big(f_u(\tau)+\tau\big) + f_u(\tau)+\tau \mid (u,f_u)\in F_s, (u,g_u)\in B_t \right\},$$

electronically storing consecutive, non-overlapping intervals, $[\tau_1,\tau_2)$, so that a single candidate node, u, is optimal for the whole interval. A candidate is optimal for a departure time $\tau$, if the shortest path for departure time $\tau$ passes via this candidate node. For a time query (computing the arrival time at t when departing from s at time $\tau$), one can skip scanning candidates since the required candidate is unambiguously known. For a profile query, one may build the union of all candidate nodes c(s,t, $\tau$) over all times $\tau$. For a sub-profile query, one can build the union of all candidate nodes c(s,t, $\tau$) over $\tau$ in the subset of departure times. The above-described algorithm may be referred to as "OptCandidate" algorithm.

According to a further development of the method in accordance with the invention said method may further comprise computing a table ("Table")

$$\text{table}(s,t) := \min \left\{ g_u * f_u \mid (u,f_u)\in F_s, (u,g_u)\in B_t \right\}.$$

Table is computed using the intersect algorithm, but makes the intersect algorithm obsolete for queries. Table(s,t) is the travel cost profile from S→t, and time, profile and sub-profile queries can be answered directly from said table without any intersection. The above-described algorithm may be referred to as "Table" algorithm.

As already mentioned farther up, according to a further development of the method in accordance with the invention it uses approximate travel time functions defined by

$$f_{approx} := (1-\varepsilon)f(\tau) \le f_{approx} \le (1+\varepsilon)f(\tau)$$

for all departure times, $\tau$, and arbitrary $\varepsilon$, instead of the exact travel time functions, f($\tau$). A still further development of the inventive method preferably uses two values, $\varepsilon_1$, $\varepsilon_2$, so that

$$f_{approx} := (1-\varepsilon_1)f(\tau) \le f_{approx} \le (1+\varepsilon_2)f(\tau)$$

for all departure times $\tau$ and arbitrary $\varepsilon_1 >= 0$, $\varepsilon_2 >= 0$.

The implementation used here has been provided by Neubauer, S., "Space Efficient Approximation of Piecewise Linear Functions", Student Research Project (2009), http://algo2.iti.kit.edu/documents/routeplanning/neubauer_sa.pdf, the contents of which is herewith incorporated by reference into the present document as if fully set forth. There are three places to approximate TCFs: on the edges of the TCH, at the node label TCFs after the forward/backward searches, and finally with respect to the table entries. Approximating the latter two is rather straightforward, but performing a TCH profile query on approximate edge TCFs requires a change of the stall-on-demand since one must not stall an optimal path. This can be circumvented by performing the initial min-max-corridor query on exact values with stall-on-demand.

The proposed embodiments currently provide the most efficient way to compute time-dependent travel costs between the distinct locations of the TDVRP. Since less pre-computation space and time are needed in comparison with the prior art, completely new utilizations are possibly, for instance computing travel times on demand. The time-dependent Dijkstra algorithm, which is mostly used in prior art industrial applications, takes too long on large road networks for any on-demand scenario. Additionally, the saved time may be invested in more iterations of the TDVRP solver to compute even more accurate solutions.

As stated above, the proposed method may require a time-dependent speed-up technique that is bidirected and non-goaldirected, similar to ref. 2. These requirements stem from the similarity of the underlying problem of many-to-many shortest paths, but the inventive method is significantly different from the solution provided in ref. 2.

Further characteristics and advantages of the invention will now be described in exemplary fashion with reference to the appended drawings.

Figs. 1 a-c     schematically show construction of a computer graph from a road network;
Figs. 2a-f     show TCH construction from an arbitrary graph comprising six nodes;
Fig. 3         shows a computer system in accordance with the invention;
Fig. 4         shows a flow chart for illustrating the method in accordance with the invention;
Fig. 5         shows a screen output generated by the computer system in accordance with the invention;
Fig. 6         shows Tables 1 through 3 referred to in the present description; and
Fig. 7         shows Tables 4 and 5 referred to in the present description

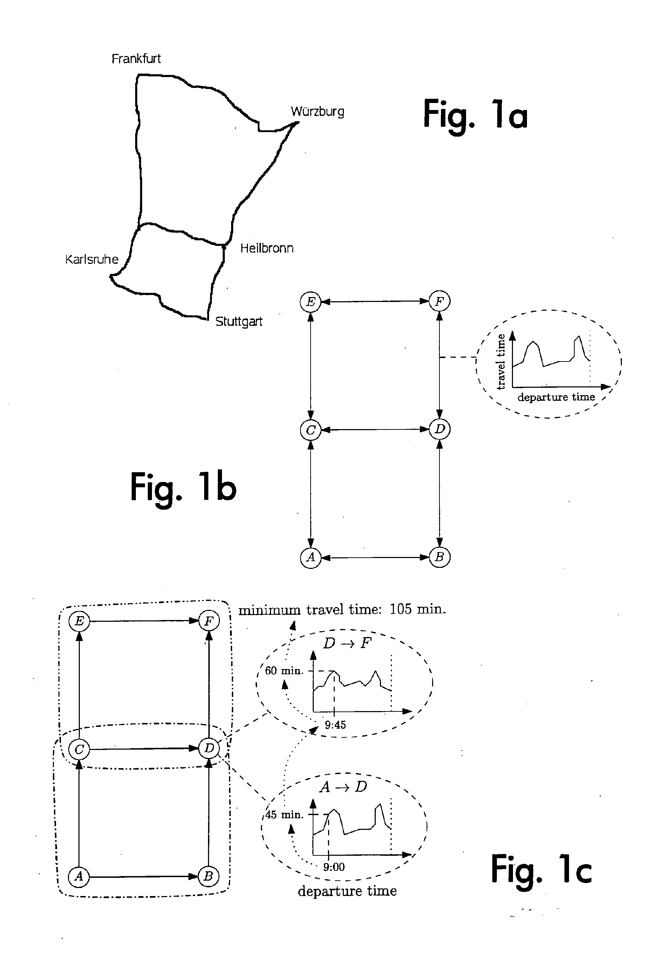

A road network is modeled as a graph in Figs. 1 a through 1 c. The original road network is depicted in Fig. 1a. The nodes correspond to highway junctions (or cities, e.g., "Frankfurt") and the edges correspond to roads (highways) between the junctions. In the graph of Fig. 1b, the city names have been replaced by letters A through F. Each edge (u, v) in said graph has an assigned time-dependent travel time function (TTF) that maps the departure time at u to the travel time between u and v. In Fig. 1b, only one TTF is depicted for reason of clarity.

With reference to Fig. 1c, assume that the forward search space from A has the candidate nodes {A, B, C, D} (lower dash-dotted square in Fig. 1 c), and that the backward search space from F has candidate nodes {C, D, E, F} (upper dash-dotted square in Fig. 1c). To compute the travel time from A to F when departing at τ=9:00 hours, according to the invention, one evaluates the stored TTFs of intersection {C, D}. For example, the TTF from A to D gives a travel time of 45 minutes, so one evaluates the TTF from D to F at 9:45 hours and obtains an overall travel time of 105 min. The minimum of the travel time over all candidate nodes {C, D} gives the minimum travel time from A to F.

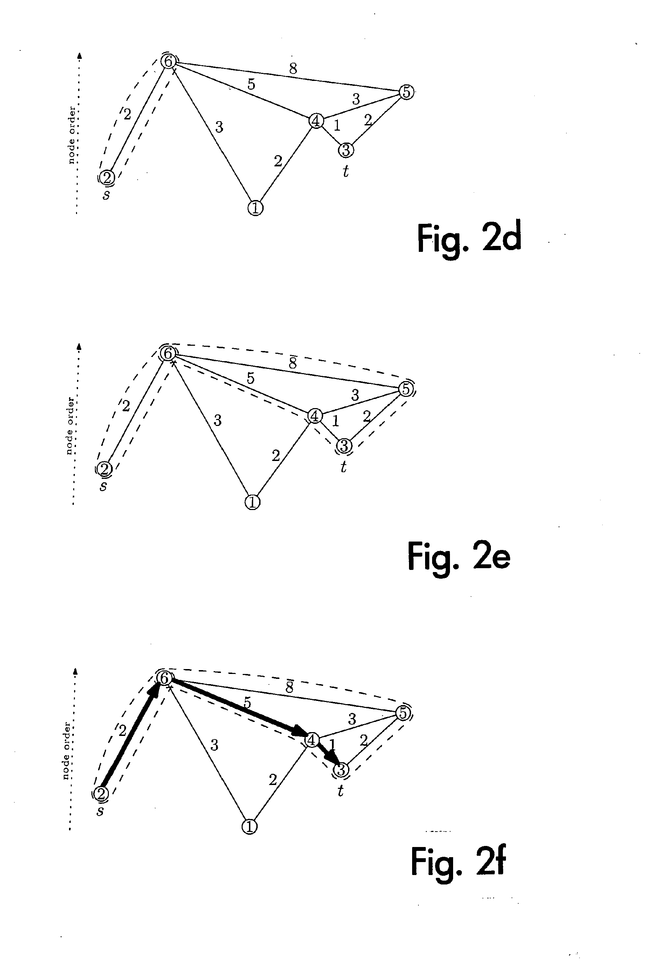

Relatively small forward and backward search spaces can be obtained by using the contraction hierarchy (CH) approach. With reference to appended Figs. 2a through 2f, assume a very simple graph of 6 nodes in a row (Fig. 2a). In context of the invention, the nodes are ordered from 1 to 6 (Figs. 2b, 2c), and then contracted in this order. Contraction of a node removes it from the remaining graph and adds shortcuts to preserve shortest path distances. For example, one may start by contracting node 1: to preserve the shortest path distance between its neighbors 6 and 4, a shortcut with weight 3 + 2 = 5 is added between the latter two nodes, and so forth. Figures 2b and 2c show the resulting CH. For better understanding, the nodes have been arranged vertically by their node order. To find a shortest path in the CH, a forward search from source node s (Fig. 2d) and a backward search from the target node t (Fig. 2e) is performed, relaxing only edges leading to more important nodes (the search goes always "up"). Both search spaces eventually meet at the node (intermediate way-point node) with the highest order on a shortest path between s and t, i.e., node 6.

Figure 2f shows an example query from source s = 2 to target t = 3. The forward search space and the backward search space are illustrated by means of dashed lines, and both search spaces meet at intermediate way-point or candidate node 6 (note that node 6 is in both search spaces). The shortest path from s to t (arrows) is the path from source node s to the candidate node 6, and then from candidate note 6 to t. The path may comprise shortcuts, and they may be "unpacked" to obtain the path in the original graph. These shortcuts make the CH approach so efficient. For example, node 1 is on the shortest path from s to t in the original graph, but node 1 is in neither one of the search spaces. The shortcut between 6 and 4 helps to skip node 1. In practice, it may be observed that a search space in a CH contains only a few hundred nodes, even for road networks with millions of nodes.

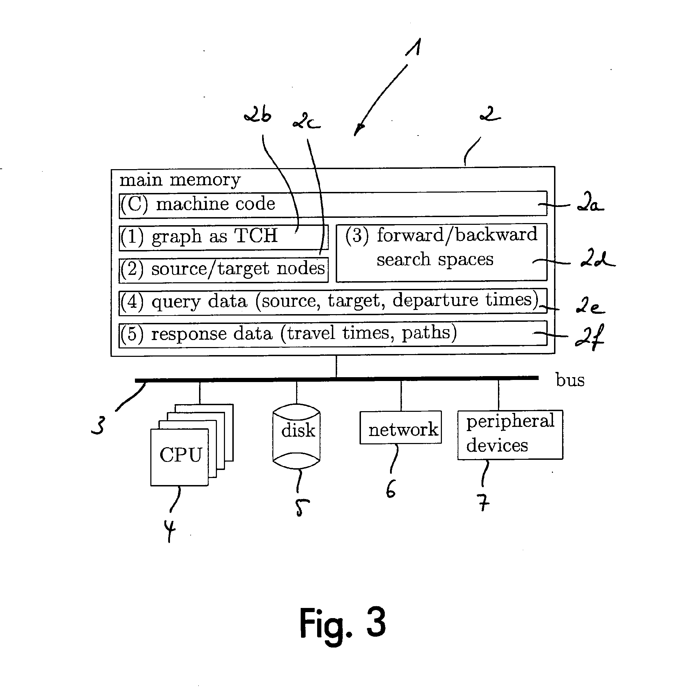

Figure 3 schematically shows a computer system in accordance with the invention. In figure 3, said computer system is denoted by reference numeral 1. Said computer system 1 comprises (main) memory 2, which memory 2 is operatively connected, via bus 3, with a plurality of data processing units (CPU) 4, storage means in the form of disk 5, data network (intranet, internet) 6, and peripheral devices 7, e.g., keyboard, mouse, monitor or the like.

Main memory 2 comprises machine code 2a particularly in the form of program code instructions which are devised for carrying out the method in accordance with the present invention. Main memory 2 further comprises CH data 2b which constitute said graphical model of the transportation network (cf. figs. 1a - 1c) in the form of a TCH, as explained with reference to figs 2a - 2f. Reference numeral 2c denotes data referring to source/target notes on said graph, and reference numeral 2d denotes data in connection with forward/backward search spaces, as also explained with reference to figs. 2a - 2f. Reference numeral 2e denotes query data, i.e., source, target, and departure times, while reference numeral 2f refers to (corresponding) response data, i.e., travel times and travel paths. All of said data 2b-2f are comprised within main memory 2 of computer system 1.

As known to a person skilled in the art, computer system 1 is not limited to systems with a plurality of CPUs 4, as depicted in Fig. 3 in exemplary fashion. CPUs 4 are devised for executing machine code 2a from main memory 2 in order to process and/or generate data 2b - 2f. At least some of said data 2b - 2f and/or at least parts of machine code 2a can be - at least temporarily - stored on/fetched from disk 5. At least query data 2e can be input into the system via data network 6, which data network can be an intranet or the internet. Alternatively or additionally, query data 2e can be input into the system via peripheral devices 7, e.g., by clicking on corresponding icons on a display screen, via voice input, by touching a touch screen, or by striking a key on a keyboard. Furthermore, peripheral devices 7 may also be arranged for providing an output of response data 2f, e.g., by showing said travel times or travel paths on a computer screen, by providing a hardcopy print-out, or by generating an acoustic output.

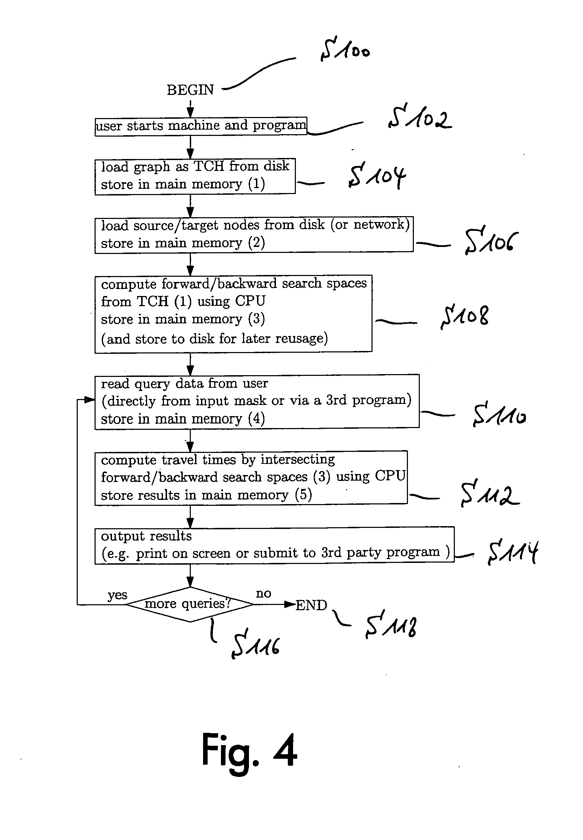

Figure 4 is a flow chart for illustrating an embodiment of the method in according with the invention. Said method starts with step S100. In subsequent step S102, the user starts a machine, e.g., the computer system 1 according to Fig. 3, which commences execution of a computer program implementing the method according to the present invention, e.g., machine code 2 are according to Fig. 3. In subsequent step S104, the transportation network graph model is loaded in TCH format from disk 5 and stored in main memory 2 according to Fig. 3. Then, in step S106, source/target nodes are loaded, either from disk 5 or from network 6 or from periphery 7, and stored in main memory 2 according to Fig. 3.

Subsequent step S108 comprises computing forward/backward search spaces 2d from TCH 2b by means of CPU 4 and storing said search spaces in main memory 2 (at reference numeral 2d according to Fig. 3). Furthermore, said search spaces 2d can also be stored to disk 5 for later re-usage.

Subsequent step S110 comprises reading query data from at least said one user and storing said query data at reference numeral 2e in main memory 2. Note that said query data can either be input directly via an input mask in connection with the computer system 1 of Fig. 3 or via a third party program.

Then, in step S112 travel times (or other travel costs) are computed by intersecting forward/backward search spaces 2d by means of CPU 4. Corresponding results are stored in memory 2 in the form of response data 2f according to Fig. 3.

Subsequent step S114 comprises generating and outputting of results, which may comprise printing said results on a computer screen or submitting said results to a third party program, as already mentioned above with reference to appended Fig. 3.

Subsequent step S116 comprises a query whether or not any more queries have to be processed. If said question is answered in the affirmative, the method returns to step S110. Otherwise, if said question is answered in the negative, the method ends at step S118.

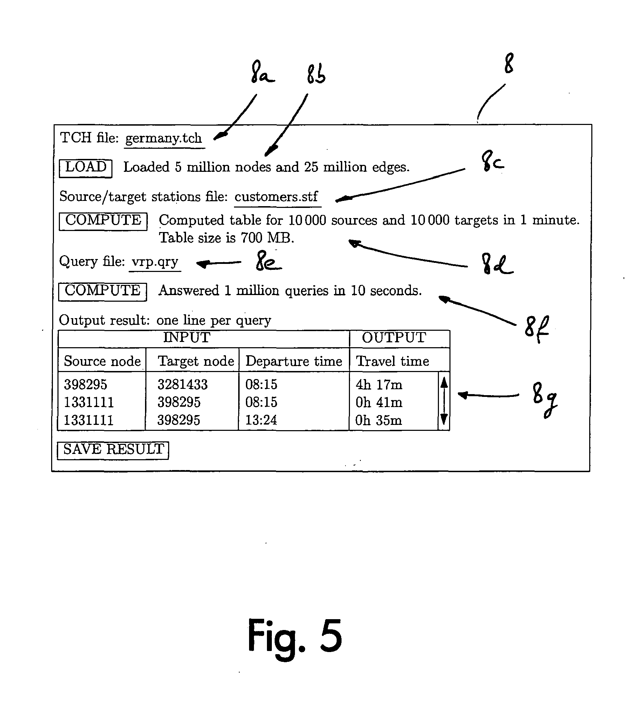

Fig. 5 schematically illustrates a screen mask 8 which may be output on peripheral devices 7 according to Fig. 3 or on a remote machine (not shown) in operative connection with data network 6 according to Fig. 3. At reference numeral 8a, the underlying TCH file is specified. As indicated at reference numeral 8b, the TCH file comprises large numbers of nodes and edges, respectively. At reference numeral 8c, a file comprising source/target stations corresponding to individual customers is specified. Reference numeral 8d denotes an output in connection with computation of a table as comprised in an embodiment of the method in accordance with the present invention. Considering the rather large numbers of sources and targets, respectively, computation time is rather short, and the required memory is rather small - both of said features are characteristic features in connection with the present invention.

At reference numeral 8e, a query file is specified, and reference numeral 8f denotes an output referring to the query time. As a further characteristic of the present invention, said query time is very short considering the actual number of queries involved.

Actual results are output at reference numeral 8g, which comprises source node, target node, departure time and travel time. Note that in output lines 2 and 3, respectively, different travel times are calculated for the same source-target configuration when choosing different departure times.

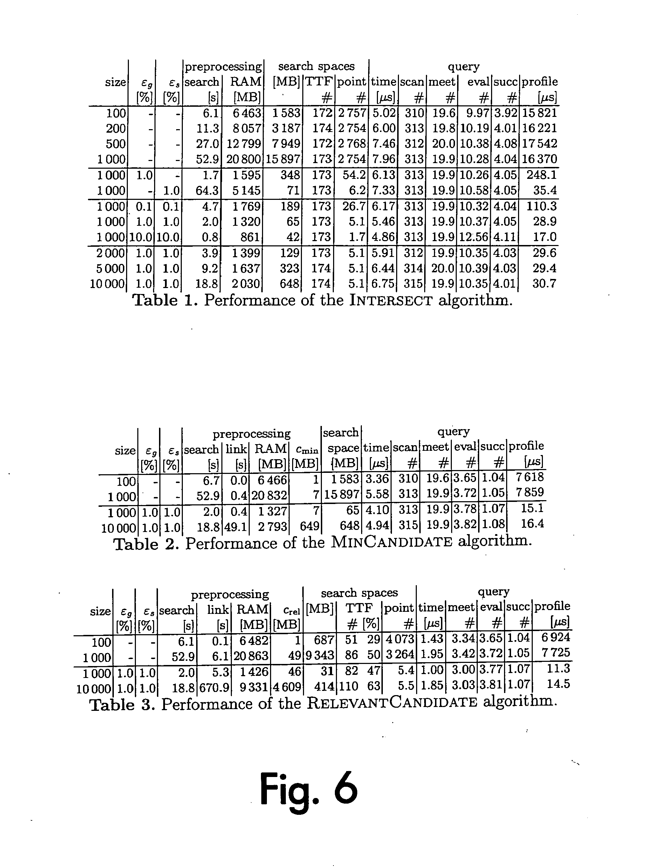

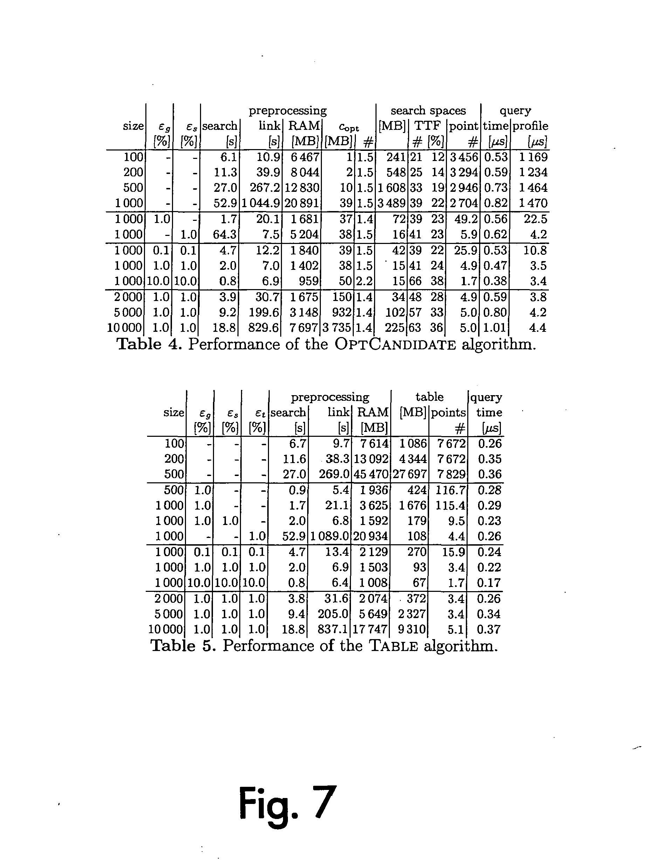

Experimental results are shown in Tables 1 through 5, cf. Figs. 6 and 7. Without limitation, the travel time was used as the requested time-dependent route parameter. All TCFs were thus specified as TTFs.

Inputs: A real-world time-dependent road network of Germany was used as input. It has been provided by company PTV AG for scientific use and has about 4.7 million nodes and 10.8 million edges. It reflects the midweek (Tuesday till Thursday) traffic collected from historical data, i.e., a high traffic scenario with about 8 % time dependent edges. More specifically, the TCH provided by ref. 4 was used as input.

Hardware/Software: The experimental evaluation was done on a computer system with two Intel Xeon X5550 processors (Quad-Core) clocked at 2.67 GHz with 48 GiB of RAM and 2x8MB of Cache running SUSE Linux 11.1. All programs were compiled with GCC 4.3.2 using optimization level 3.

Basic setup: S,T from V were chosen uniformly at random. In the experiments, |S| = |T|. TTFs were approximated in the graph with $\varepsilon_g$, the TTFs from the forward/backward searches with $\varepsilon_s$, and the TTFs in the table with $\varepsilon_t$. For the pre-computation, all 8 cores of the machine were used since pre-computation can be trivially parallelized. The preprocessing time for computing the forward and backward search spaces is referred to as "search", and the time to compute additional data ($c_{min}$, $c_{rel}$, $c_{opt}$ or table) is referred to as "link". The used RAM reported by the Linux kernel is also indicated. All query performances are averages over 100,000 queries selected uniformly at random and performed on a single core. Depending on the algorithm, also reported are some more detailed query statistics. "Scan" is the number of nodes in the forward/backward search space that were scanned during a query. "Meet" is the number of node where forward and backward search spaces met, which is a subset of the possible candidates. "Eval" is the number of TTF evaluations. "Succ" is the number of successful reductions of the tentative earliest arrival time due to another evaluated candidate. Additionally, the maximum observed error of all queries is indicated.

The memory consumption of the input TCH is given in the following table. It decreases significantly when approximate edge TTFs are used.

| $\varepsilon_g$[%] | 0.0 | 0.1 | 1.0 | 10.0 |
|---|---|---|---|---|
| graph [MB] | 4497 | 1324 | 1002 | 551 |

First, the performance of all five algorithms described farther up is evaluated without looking at the observed approximation errors. A discussion of said errors follows afterwards.

With the INTERSECT algorithm (Table 1, Fig. 6), pre-processing time and search space size are linear in the size of |S|,|T|, as expected. However, the RAM requirements have a large additive constant from the input TCH when the edge TTFs are not approximated. By approximating all of the TTFs with 1 %_one can significantly reduce the pre-computation time and RAM by 96%. A TTF is usually stored as piecewise linear function with some points and linear interpolation between these points. The memory requirements and the complexity of the operations "link" and "minimum" directly depend on the number of points. When only approximating the edge TTFs ($\varepsilon_g$ > 0), the resulting search spaces still require a considerable amount of memory. In contrary, when only approximating the search spaces ($\varepsilon_s$ > 0), the graph requires a lot of RAM, and the search space computation takes long, too. Approximate TTFs are also easier to evaluate since they have less points, thus reducing the query time. The query times are two orders of magnitude faster than a standard TCH query (600 $\mu$s). Usually, one would expect the query time to be independent of the table size. However, due to cache effects there is an increase with increasing table size and a decrease with increasing approximation (larger values for $\varepsilon$). Still, the number of TTF evaluations is around 10 and thus 5 times larger than the optimal value of 2.

By storing the minimal candidate (MINCANDIDATE, Table 2, Fig. 6), one can reduce TTF evaluations by about 60% to 3.7, which also reduces the query time. However, the pre-computation gets more expensive since one needs to compute the minimal candidates ("link"), which scales quadratically in time and space, but is only significant for size 10,000 (or larger). MINCANDIDATE still needs to scan on average about 310 nodes in the forward/backward search spaces. Therefore, the query time is only reduced by 24-40%.

Algorithm RELEVANTCANDIDATE (Table 3, Fig. 7) makes scanning obsolete. It stores around 3-3.4 candidates per source/target pair, which is significantly less than the 20 meeting nodes in Table 2. This reduces the query time by a factor of 2-4, but the quadratic scaling of time and space is already significant for size 1,000. Due to the knowledge of relevant candidates, one can prune the search spaces. For size 100, it is only necessary to store 29% of all computed search space TTFs. However, the percentage naturally increases with table size, and one needs to store 63% of all TTFs for size 10,000. This increase may be lower when S and T are not randomly selected.

One can further reduce query time to below 1 $\mu$s with the OPTCANDIDATE algorithm (Table 4, Fig. 7). When neither the edge TTFs nor the search space TTFs are approximated, pre-computation becomes very expensive due to the high number of TTF points. For size 1,000, linking is more than 170 times slower than with RELEVANTCANDIDATE since relevant candidate does not look at the TTF points but only at the separately stored min-max values. However, by approximating the search space TTFs, one can further reduce this factor to just 1.5. Moreover, OPTCANDIDATE is more space efficient since one can further reduce the number of required search space TTFs and candidates per source/ target pair by a factor of 2.

Naturally, the best query times are achieved with the TABLE algorithm (Table 5, Fig. 7). They are about a factor of 2 smaller than with OPTCANDIDATE and lie around 0.3 $\mu$s. The pre-computation does not increase significantly, but memory consumption does. Practical cases of size 1,000 can still be computed with less than 2 GiB of RAM when using approximation (table TTFs are $\varepsilon_t$-approximations). Compared to |S| • |T| TCH profile queries, which require 51.8 ms for an exact calculation and 2 ms with approximation $\varepsilon_g$ = 1%, the methods in accordance with the invention are significantly faster. With size 500 in the exact case, 500 • 500 TCH profile queries on 8 threads take 1619 s, and therefore the methods in accordance with the invention achieve a speed-up of 5.5. This speed-up increases for $\varepsilon_g$ = 1% to a factor of 9.9 since the duplicative work of the TCH queries now has a larger share. However, with table size increased to 1,000, speed-up only increases to a factor of 11 since link time increases quadratically.

**Claims**

1. A method of determining a time-dependent route parameter for a transportation network, for use in an automated routing system in connection with traffic, transportation, and logistics, said method comprising the steps:

a) modelling the transportation network in the form of a graph (G) in the memory (2) of a computer system (1), said graph comprising a plurality of nodes (s, t, u, v, w), wherein said nodes correspond to starting-locations, target locations, and intermediate way-points in said transportation network, and a plurality of edges (E) interconnecting pairs of said nodes, wherein said edges indicate travel costs for travelling between respective nodes, wherein at least some of said travel costs are time-dependent quantities;
b) for at least one arbitrary starting-node (s) of said plurality of nodes and for a first set of departure times ($\tau$), computing and storing first travel costs for respective first routes on said graph, said first routes leading from said one starting-node to a first plurality of intermediate way-point nodes (u, v, w) of said plurality of nodes;
c) for at least one arbitrary target node (t) of said plurality of nodes and for a second set of departure times, computing and storing second travel costs for respective second routes on said graph, said second routes leading from a second plurality of intermediate way-point nodes (u, v, w) of said plurality of nodes to said one target node;
d) for a plurality of target nodes and/or starting-nodes, determining a time-dependent travel cost for at least one route on said graph between said starting-node and said target node via at least one intermediate way-point node, which at least one intermediate way-point node is comprised in both of said first and second plurality of intermediate way-point nodes, from said first travel costs and said second travel costs, and
e) for a third set of departure times ($\tau$), determining said time-dependent route parameter based on said time-dependent travel cost.

2. The method of claim 1, **characterized in that**

- step b) comprises obtaining said first travel costs in the form of a forward travel cost profile for at least one respective route between said starting-node (s) and each intermediate way-point node (u, v, w) of said first plurality of intermediate way-point nodes, wherein a travel cost profile between two nodes is defined as comprising the time-dependent travel costs between said two nodes at least for said first set of departure times and is defined by means of a travel cost function, TCF or f($\tau$), where $\tau$ denotes the departure time;
- step c) comprises obtaining said second travel costs in the form of a backward travel cost profile for at least one respective route between said target node (t) and each intermediate way-point node (u, v, w) of said second plurality of intermediate way-point nodes; and
- step d) comprises determining said time-dependent travel cost by combining said forward travel cost profiles and said backward travel cost profiles at said at least one intermediate way-point node.

3. The method of claim 2, **characterized by** the further steps of:

- combining said forward travel cost profile and said backward travel cost profile to obtain a combined travel cost profile; and
- determining said time-dependent travel cost from said combined travel cost profile.

4. The method of any one of claims 1 through 3, **characterized in that**, in step d), said time-dependent travel cost is the minimal time-dependent travel cost.

5. The method of any one of claims 1 through 4, **characterized in that**, in step a), said time-dependent travel costs comprise at least one of travel time, travel expenses, route toll, wear, labour costs, and other travel-related costs.

6. The method of any one of claims 1 through 5, **characterized in that**, at least in step b) and/or c), a derivative quantity of the departure time ($\tau$) is used as input variable, wherein preferably said derivative quantity is the arrival time at said target node (t).

7. The method of any one of claims 1 through 6, **characterized in that** any one of said first through third sets comprises a subset of all departure times ($\tau$), wherein said all departure times denotes all departure times within a predefined range, which is preferably infinite, e.g., under the assumption that all travel cost functions are periodical with period T, so that $f(\tau + T) = f(\tau) = f(\tau + 2T)$.

8. The method of any one of claims 1 through 7, **characterized in that** at least some of said time-dependent travel costs are approximate travel costs.

9. The method of any one of claims 1 through 8, **characterized in that** determining said route parameter comprises determining an actual time-dependent route in said route network.

10. The method of any one of claims 1 through 9, **characterized in that** steps a) through c) are performed only once for a plurality of determinations of time-dependent route parameters, wherein preferably said first and seconds travel costs, or said forward and backward travel cost profiles according to claim 2, are electronically stored for use in subsequent determinations of time-dependent route parameters.

11. The method of any one of claims 1 through 10, **characterized in that** at least steps a) through c) are repeated based on a change of travel costs between respective nodes (s, t, u, v, w) of said graph (G), wherein preferably said travel costs are determined experimentally and/or on a regular basis.

12. The method of any one of claims 1 through 11, **characterized in that** the nodes (s, t, u, v, w) of said graph (G) are arranged by using a hierarchical speedup technique, suitable hierarchical speedup techniques comprising Contraction Hierarchies, Highway Hierarchies, Reach-based Routing, Highway Node Routing, and Transit-node Routing, preferably as described in D. Delling, P. Sanders, D. Schultes, and Dorothea Wagner, "Engineering Route Planning Algorithms", Algorithmics of Large and Complex Networks, Lecture Notes in Computer Science, vol. 5515, Springer 2009, pages 117-139, http://i11www.ira.uka.de/extra/publications/dssw-erpa-09.pdf.

13. The method of any one of claims 1 through 12, **characterized in that** the nodes (s, t, u, v, w) of said graph (G) are arranged in the form of a time-dependent contraction hierarchy, TCH, wherein all nodes are ordered by increasing importance, and wherein individual nodes are contracted by removing them from the graph without changing minimum travel costs, e.g., shortest travel times, between remaining, more important nodes, preferably as defined in G.V. Batz, D. Delling, P. Sanders, C. Vetter, "Time-dependent Contraction Hierarchies", ALENEX 2009, pages 97-104.

14. The method of claim 12 or 13, **characterized in that** said node ordering and/or construction of the TCH are performed once for a plurality of determinations of time-dependent route parameters, wherein preferably said node ordering and/or said TCH construction are electronically stored for use in subsequent determinations of time-dependent route parameters.

15. A computer program product, comprising program code for execution by means of a computer system (1), wherein said program code comprises:

    - a first plurality of instructions (2a) for implementing the method of any one of the preceding claims, and
    - optionally, a second plurality of instructions for implementing a user interface (8) for performing a query for a time-dependent route parameter, for use in an automated routing system in connection with traffic, transportation, and logistics, wherein said interface preferably requires an input of at least one starting-location (s), at least one target location (t), and a departure time ($\tau$) from said starting-location or an arrival time at said target location.

16. A route planning system, comprising at least one computer system (1), wherein said computer system implements, preferably by means of the computer program product of claim 15:

    - the method of any one of claims 1 through 14, and
    - optionally, a user interface (8) for performing a query for a time-dependent route parameter, for use in an automated routing system in connection with traffic, transportation, and logistics, wherein said interface preferably requires an input of at least one starting-location (s), at least one target location (t), and a departure time ($\tau$) from said starting-location or an arrival time at said target location,

wherein preferably said method and said interface are implemented on different computers in said computer system, said computer preferably being linked via a data network (6), preferably an intranet or the internet.

Frankfurt

Würzburg

Heilbronn

Karlsruhe

Stuttgart

Fig. 1a

Fig. 1b

E — F

travel time

departure time

C — D

A — B

minimum travel time: 105 min.

$D \to F$

60 min.

9:45

$A \to D$

45 min.

9:00

departure time

Fig. 1c

Fig. 2a

Fig. 2b

Fig. 2c

Fig. 2d

Fig. 2e

Fig. 2f

main memory
(C) machine code — 2a
(1) graph as TCH
(2) source/target nodes
(3) forward/backward search spaces — 2d
(4) query data (source, target, departure times) — 2e
(5) response data (travel times, paths) — 2f

bus

CPU    disk    network    peripheral devices

3    4    5    6    7

**Fig. 3**

*S100*

BEGIN

user starts machine and program    *S102*

load graph as TCH from disk
store in main memory (1)    *S104*

load source/target nodes from disk (or network)
store in main memory (2)    *S106*

compute forward/backward search spaces
from TCH (1) using CPU
store in main memory (3)
(and store to disk for later reusage)    *S108*

read query data from user
(directly from input mask or via a 3rd program)
store in main memory (4)    *S110*

compute travel times by intersecting
forward/backward search spaces (3) using CPU
store results in main memory (5)    *S112*

output results
(e.g. print on screen or submit to 3rd party program )    *S114*

yes        no
more queries?        END    *S118*

*S116*

# Fig. 4

TCH file: germany.tch

[LOAD] Loaded 5 million nodes and 25 million edges.

Source/target stations file: customers.stf

[COMPUTE] Computed table for 10 000 sources and 10 000 targets in 1 minute. Table size is 700 MB.

Query file: vrp.qry

[COMPUTE] Answered 1 million queries in 10 seconds.

Output result: one line per query

| INPUT | | | OUTPUT |
|---|---|---|---|
| Source node | Target node | Departure time | Travel time |
| 398295 | 3281433 | 08:15 | 4h 17m |
| 1331111 | 398295 | 08:15 | 0h 41m |
| 1331111 | 398295 | 13:24 | 0h 35m |

[SAVE RESULT]

*8a   8b   8   8c   8e   8d   8f   8g*

# Fig. 5

| size | $\varepsilon_g$ [%] | $\varepsilon_s$ [%] | preprocessing | | search spaces | | | query | | | | | |
|---|---|---|---|---|---|---|---|---|---|---|---|---|---|
| | | | search [s] | RAM [MB] | [MB] | TTF # | point # | time [μs] | scan # | meet # | eval # | succ # | profile [μs] |
| 100 | - | - | 6.1 | 6 463 | 1 583 | 172 | 2 757 | 5.02 | 310 | 19.6 | 9.97 | 3.92 | 15 821 |
| 200 | - | - | 11.3 | 8 057 | 3 187 | 174 | 2 754 | 6.00 | 313 | 19.8 | 10.19 | 4.01 | 16 221 |
| 500 | - | - | 27.0 | 12 799 | 7 949 | 172 | 2 768 | 7.46 | 312 | 20.0 | 10.38 | 4.08 | 17 542 |
| 1 000 | - | - | 52.9 | 20 800 | 15 897 | 173 | 2 754 | 7.96 | 313 | 19.9 | 10.28 | 4.04 | 16 370 |
| 1 000 | 1.0 | - | 1.7 | 1 595 | 348 | 173 | 54.2 | 6.13 | 313 | 19.9 | 10.26 | 4.05 | 248.1 |
| 1 000 | - | 1.0 | 64.3 | 5 145 | 71 | 173 | 6.2 | 7.33 | 313 | 19.9 | 10.58 | 4.05 | 35.4 |
| 1 000 | 0.1 | 0.1 | 4.7 | 1 769 | 189 | 173 | 26.7 | 6.17 | 313 | 19.9 | 10.32 | 4.04 | 110.3 |
| 1 000 | 1.0 | 1.0 | 2.0 | 1 320 | 65 | 173 | 5.1 | 5.46 | 313 | 19.9 | 10.37 | 4.05 | 28.9 |
| 1 000 | 10.0 | 10.0 | 0.8 | 861 | 42 | 173 | 1.7 | 4.86 | 313 | 19.9 | 12.56 | 4.11 | 17.0 |
| 2 000 | 1.0 | 1.0 | 3.9 | 1 399 | 129 | 173 | 5.1 | 5.91 | 312 | 19.9 | 10.35 | 4.03 | 29.6 |
| 5 000 | 1.0 | 1.0 | 9.2 | 1 637 | 323 | 174 | 5.1 | 6.44 | 314 | 20.0 | 10.39 | 4.03 | 29.4 |
| 10 000 | 1.0 | 1.0 | 18.8 | 2 030 | 648 | 174 | 5.1 | 6.75 | 315 | 19.9 | 10.35 | 4.01 | 30.7 |

Table 1. Performance of the INTERSECT algorithm.

| size | $\varepsilon_g$ [%] | $\varepsilon_s$ [%] | preprocessing | | | $c_{min}$ [MB] | search space [MB] | query | | | | | |
|---|---|---|---|---|---|---|---|---|---|---|---|---|---|
| | | | search [s] | link [s] | RAM [MB] | | | time [μs] | scan # | meet # | eval # | succ # | profile [μs] |
| 100 | - | - | 6.7 | 0.0 | 6 466 | 1 | 1 583 | 3.36 | 310 | 19.6 | 3.65 | 1.04 | 7 618 |
| 1 000 | - | - | 52.9 | 0.4 | 20 832 | 7 | 15 897 | 5.58 | 313 | 19.9 | 3.72 | 1.05 | 7 859 |
| 1 000 | 1.0 | 1.0 | 2.0 | 0.4 | 1 327 | 7 | 65 | 4.10 | 313 | 19.9 | 3.78 | 1.07 | 15.1 |
| 10 000 | 1.0 | 1.0 | 18.8 | 49.1 | 2 793 | 649 | 648 | 4.94 | 315 | 19.9 | 3.82 | 1.08 | 16.4 |

Table 2. Performance of the MINCANDIDATE algorithm.

| size | $\varepsilon_g$ [%] | $\varepsilon_s$ [%] | preprocessing | | | $c_{rel}$ [MB] | search spaces | | | | query | | | | |
|---|---|---|---|---|---|---|---|---|---|---|---|---|---|---|---|
| | | | search [s] | link [s] | RAM [MB] | | [MB] | TTF # | TTF [%] | point # | time [μs] | meet # | eval # | succ # | profile [μs] |
| 100 | - | - | 6.1 | 0.1 | 6 482 | 1 | 687 | 51 | 29 | 4 073 | 1.43 | 3.34 | 3.65 | 1.04 | 6 924 |
| 1 000 | - | - | 52.9 | 6.1 | 20 863 | 49 | 9 343 | 86 | 50 | 3 264 | 1.95 | 3.42 | 3.72 | 1.05 | 7 725 |
| 1 000 | 1.0 | 1.0 | 2.0 | 5.3 | 1 426 | 46 | 31 | 82 | 47 | 5.4 | 1.00 | 3.00 | 3.77 | 1.07 | 11.3 |
| 10 000 | 1.0 | 1.0 | 18.8 | 670.9 | 9 331 | 4 609 | 414 | 110 | 63 | 5.5 | 1.85 | 3.03 | 3.81 | 1.07 | 14.5 |

Table 3. Performance of the RELEVANTCANDIDATE algorithm.

# Fig. 6

| size | $\varepsilon_g$ [%] | $\varepsilon_s$ [%] | preprocessing | | | $c_{opt}$ | | search spaces | | | | query | |
|---|---|---|---|---|---|---|---|---|---|---|---|---|---|
| | | | search [s] | link [s] | RAM [MB] | [MB] | # | [MB] | TTF # | [%] | point # | time [μs] | profile [μs] |
| 100 | - | - | 6.1 | 10.9 | 6 467 | 1 | 1.5 | 241 | 21 | 12 | 3 456 | 0.53 | 1 169 |
| 200 | - | - | 11.3 | 39.9 | 8 044 | 2 | 1.5 | 548 | 25 | 14 | 3 294 | 0.59 | 1 234 |
| 500 | - | - | 27.0 | 267.2 | 12 830 | 10 | 1.5 | 1 608 | 33 | 19 | 2 946 | 0.73 | 1 464 |
| 1 000 | - | - | 52.9 | 1 044.9 | 20 891 | 39 | 1.5 | 3 489 | 39 | 22 | 2 704 | 0.82 | 1 470 |
| 1 000 | 1.0 | - | 1.7 | 20.1 | 1 681 | 37 | 1.4 | 72 | 39 | 23 | 49.2 | 0.56 | 22.5 |
| 1 000 | - | 1.0 | 64.3 | 7.5 | 5 204 | 38 | 1.5 | 16 | 41 | 23 | 5.9 | 0.62 | 4.2 |
| 1 000 | 0.1 | 0.1 | 4.7 | 12.2 | 1 840 | 39 | 1.5 | 42 | 39 | 22 | 25.9 | 0.53 | 10.8 |
| 1 000 | 1.0 | 1.0 | 2.0 | 7.0 | 1 402 | 38 | 1.5 | 15 | 41 | 24 | 4.9 | 0.47 | 3.5 |
| 1 000 | 10.0 | 10.0 | 0.8 | 6.9 | 959 | 50 | 2.2 | 15 | 66 | 38 | 1.7 | 0.38 | 3.4 |
| 2 000 | 1.0 | 1.0 | 3.9 | 30.7 | 1 675 | 150 | 1.4 | 34 | 48 | 28 | 4.9 | 0.59 | 3.8 |
| 5 000 | 1.0 | 1.0 | 9.2 | 199.6 | 3 148 | 932 | 1.4 | 102 | 57 | 33 | 5.0 | 0.80 | 4.2 |
| 10 000 | 1.0 | 1.0 | 18.8 | 829.6 | 7 697 | 3 735 | 1.4 | 225 | 63 | 36 | 5.0 | 1.01 | 4.4 |

Table 4. Performance of the OptCandidate algorithm.

| size | $\varepsilon_g$ [%] | $\varepsilon_s$ [%] | $\varepsilon_t$ [%] | preprocessing | | | table | | query |
|---|---|---|---|---|---|---|---|---|---|
| | | | | search [s] | link [s] | RAM [MB] | [MB] | points # | time [μs] |
| 100 | - | - | - | 6.7 | 9.7 | 7 614 | 1 086 | 7 672 | 0.26 |
| 200 | - | - | - | 11.6 | 38.3 | 13 092 | 4 344 | 7 672 | 0.35 |
| 500 | - | - | - | 27.0 | 269.0 | 45 470 | 27 697 | 7 829 | 0.36 |
| 500 | 1.0 | - | - | 0.9 | 5.4 | 1 936 | 424 | 116.7 | 0.28 |
| 1 000 | 1.0 | - | - | 1.7 | 21.1 | 3 625 | 1 676 | 115.4 | 0.29 |
| 1 000 | 1.0 | 1.0 | - | 2.0 | 6.8 | 1 592 | 179 | 9.5 | 0.23 |
| 1 000 | - | - | 1.0 | 52.9 | 1 089.0 | 20 934 | 108 | 4.4 | 0.26 |
| 1 000 | 0.1 | 0.1 | 0.1 | 4.7 | 13.4 | 2 129 | 270 | 15.9 | 0.24 |
| 1 000 | 1.0 | 1.0 | 1.0 | 2.0 | 6.9 | 1 503 | 93 | 3.4 | 0.22 |
| 1 000 | 10.0 | 10.0 | 10.0 | 0.8 | 6.4 | 1 008 | 67 | 1.7 | 0.17 |
| 2 000 | 1.0 | 1.0 | 1.0 | 3.8 | 31.6 | 2 074 | 372 | 3.4 | 0.26 |
| 5 000 | 1.0 | 1.0 | 1.0 | 9.4 | 205.0 | 5 649 | 2 327 | 3.4 | 0.34 |
| 10 000 | 1.0 | 1.0 | 1.0 | 18.8 | 837.1 | 17 747 | 9 310 | 5.1 | 0.37 |

Table 5. Performance of the Table algorithm.

# Fig. 7

Europäisches
Patentamt

European
Patent Office

Office européen
des brevets

# EUROPEAN SEARCH REPORT

Application Number

EP 10 00 3848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités" JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525 ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * | 1-16 | INV. G06Q10/00 TECHNICAL FIELDS SEARCHED (IPC) G06Q |

The present search report has been drawn up for all claims

| Place of search | Date of completion of the search | Examiner |
|---|---|---|
| The Hague | 24 August 2010 | Bassanini, Anna |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

## EUROPEAN SEARCH REPORT

Application Number

EP 10 00 3848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | - - - - - | | |

TECHNICAL FIELDS
SEARCHED      (IPC)

The present search report has been drawn up for all claims

| Place of search | Date of completion of the search | Examiner |
|---|---|---|
| The Hague | 24 August 2010 | Bassanini, Anna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DIJKSTRA, E.W.** A Note on Two Problems in Connexion with Graphs. *Numerische Mathematik,* 1959, vol. 1, 269-271
- **SEBASTIAN KNOPP ; PETER SANDERS ; DOMINIK SCHULTES ; FRANK SCHULZ ; DOROTHEA WAGNER.** Computing Many-to-Many Shortest Paths Using Highway Hierarchies. *Proceedings of the 9th Workshop on Algorithm Engineering and Experiments (ALENEX'07,* 2007, 36-45
- Contraction Hierarchies: Faster and Simpler Hierarchical Routing in Road Networks. **ROBERT GEISBERGER ; PETER SANDERS ; DOMINIK SCHULTES ; DANIEL DELLING.** Proceedings of the 7th Workshop on Experimental Algorithms (WEA'08. Springer, 2008, vol. 5038, 319-333
- Time-Dependent Route Planning. **DANIEL DELLING ; DOROTHEA WAGNER.** Robust and Online Large-Scale Optimization. Springer, 2009, vol. 5868, 207-230
- **VEIT BATZ ; DANIEL DELLING ; PETER SANDERS ; CHRISTIAN VETTER.** Time-Dependent Contraction Hierarchies. *Proceedings of the 11th Workshop on Algorithm Engineering and Experiments (ALENEX'09,* April 2009, 97-105
- **MALANDRAKI, C. ; DASKIN, M.S.** Time Dependent Vehicle Routing Problems: Formulations, Properties and Heuristic Algorithms. *Transportation Science,* 1992, vol. 26 (3), 185-200
- **JUNG, S. ; HAGHANI, A.** Genetic Algorithm for the Time-Dependent Vehicle Routing Problem. *Journal of the Transportation Research Board,* 2001, vol. 1771, 164-171
- **ICHOUA, S. ; GENDREAU, M. ; POTVIN, J.Y.** Vehicle Dispatching with Time-Dependent Travel Times. *European Journal of Operational Research,* 2003, vol. 144, 379-396
- **DONATI, A.V. ; MONTEMANNI, R. ; CASAGRANDE, N. ; RIZZOLI, A.E. ; GAMBARDELLA, L.M.** Time dependent vehicle routing problem with a multi ant colony system. *European Journal of Operational Research,* 2008, vol. 185, 1174-1191
- **HASHIMOTO, H. ; YAGIURA, M. ; IBARAKI, T.** An Iterated Local Search Algorithm for the Time-Dependent Vehicle Routing Problem with Time Windows. *Discrete Optimization,* 2008, vol. 5, 434-456
- Engineering Route Planning Algorithms. **D. DELLING ; P. SANDERS ; D. SCHULTES ; DOROTHEA WAGNER.** Algorithmics of Large and Complex Networks. Springer, 2009, vol. 5515, 117-139
- **G.V. BATZ ; D. DELLING ; P. SANDERS ; C. VETTER.** Time-dependent Contraction Hierarchies. *ALENEX 2009,* 2009, 97-104
- **NEUBAUER, S.** Space Efficient Approximation of Piecewise Linear Functions. *Student Research Project,* 2009, http://algo2.iti.kit.edu/documents/routeplanning/neubauer_sa.pdf